# EUROPÄISCHE PATENTSCHRIFT

(11) **EP 3 444 177 B1**
(45) Veröffentlichungstag und Bekanntmachung des Hinweises auf die Patenterteilung: **26.02.2020**
(21) Anmeldenummer: 18184487.9
(22) Anmeldetag: 19.07.2018
(51) Int. Cl.: B62M 6/55, B62M 11/14, B62M 11/18, F16H 63/30

(54) **TRETLAGERANTRIEB EINES FAHRZEUGS, SOWIE FAHRZEUG MIT EINEM SOLCHEN TRETLAGERANTRIEB**
BOTTOM BRACKET DRIVE OF A VEHICLE, AND A VEHICLE COMPRISING SUCH A BOTTOM BRACKET DRIVE
ENTRAÎNEMENT DE PALIER DE PÉDALIER D'UN VÉHICULE AINSI QUE VÉHICULE DOTÉ D'UN TEL ENTRAÎNEMENT DE PALIER DE PÉDALIER

(30) Priorität: 14.08.2017 DE 102017214156
(43) Veröffentlichungstag der Anmeldung: 20.02.2019
(73) Patentinhaber: Robert Bosch GmbH, 70442 Stuttgart (DE)
(72) Erfinder: Hilzinger, Juergen, 71272 Renningen (DE)

(56) Entgegenhaltungen:
- EP-A1- 3 153 393
- EP-A1- 3 323 704
- EP-A2- 1 132 287
- CH-A- 45 687

## Beschreibung

### Stand der Technik

Die vorliegende Erfindung betrifft einen Tretlagerantrieb eines Fahrzeugs, insbesondere eines Zweirades, sowie ein Fahrzeug mit einem solchen Tretlagerantrieb zur Reduzierung der Stoß- und Geräuschbelastung der Bauteile bei dem Schaltvorgang.

Tretlagerantriebe sind aus dem Stand der Technik in unterschiedlichen Ausgestaltungen bekannt. Tretlagerantriebe werden üblicherweise bei unterschiedlichen Fahrzeugen, insbesondere bei Fahrrädern mit einem elektrischen Fahrzeugantrieb eingesetzt. Diese Fahrzeuge teilen sich in eBikes und Pedelecs auf, wobei der Unterschied in der Art der Unterstützung während der Fahrt liegt. Der elektrische Fahrzeugantrieb ist dabei direkt unterhalb des Fahrzeugrahmens angeordnet, währenddessen sich eine Gangschaltung an der mittels einer Kette oder eines Riemens angetriebenen Achse befindet. Die Gangschaltung ist beispielsweise eine Nabengangschaltung, die als Planetengetriebe ausgebildet ist. Das Schalten zwischen den Gängen erfolgt durch das Blockieren einzelner in der Gangschaltung angeordneter Zahnräder, wobei diese Zahnräder bei dem Schaltvorgang schlagartig abgebremst werden. Entsprechend werden die betroffenen Bauteile mechanisch stoßbelastet, wodurch wiederum eine Geräuschbelastung entsteht. Dokument EP3153393 A1 offenbart die Präambel des Anspruchs 1.

### Offenbarung der Erfindung

Der erfindungsgemäße Tretlagerantrieb mit den Merkmalen des Anspruchs 1 weist demgegenüber den Vorteil auf, dass ein Getriebe in den Tretlagerantrieb integriert ist, der Schaltvorgang durch einen zusätzlichen Elektromotor automatisch ausgeführt werden kann und die mechanische, sowie auch die Stoß- und Geräuschbelastung reduziert sind, so dass die entsprechenden Bauteile kostengünstiger herstellbar sind, eine erhöhte Lebenserwartung aufweisen und das Fahrerlebnis angenehmer gestaltet ist. Dies wird erfindungsgemäß dadurch erreicht, dass der Tretlagerantrieb eines Fahrzeugs, insbesondere eines Zweirades, insbesondere eines Elektrofahrrads, einen elektrischen Fahrzeugantrieb, ein Getriebe, eine Schaltkulisse und einen elektrischen Antrieb zur Betätigung der Schaltkulisse und eine Dämpfungseinrichtung umfasst, wobei die Dämpfungseinrichtung zwischen dem Getriebe und der Schaltkulisse den Schaltstoß dämpft. Die Dämpfungseinrichtung nimmt somit einen Teil der Stoßenergie auf, wodurch die Kontaktierung mit der Schaltkulisse gedämpft ist.

Die Unteransprüche zeigen bevorzugte Weiterbildungen der Erfindung.

Bevorzugt umfasst das Getriebe mindestens ein Schaltfinger. Der mindestens eine Schaltfinger ist mit einem drehbeweglichen Teil des Getriebes verbunden, wobei ein Blockieren des mindestens einen Schaltfingers das Unter- bzw. Übersetzungsverhältnis des Getriebes bestimmt.

Vorzugsweise sind mindestens ein Schaltfinger und/oder die Schaltkulisse mindestens zweiteilig ausgebildet. Hierdurch wird insbesondere eine einfache Einfügung des Dämpfungselementes zwischen dem jeweils ersten Teil und dem zweiten Teil möglich, wobei die Dämpfung durch eine Relativbewegung zwischen dem ersten und dem zweiten Teil erfolgt und die kinetische Energie der Kollision abgefangen werden kann.

Weiter bevorzugt weist die Schaltkulisse mindestens ein Blockierelement auf. Das Blockierelement ist mit der Schaltkulisse gekoppelt und greift in Abhängigkeit von der Position der Schaltkulisse derart in das Getriebe ein, dass durch das Blockierelement ein Schaltsignal arretiert ist.

Weiter bevorzugt ist die Dämpfungseinrichtung zwischen dem Blockierelement und der Schaltkulisse angeordnet. Die Dämpfungseinrichtung kann beispielsweise eine flächige Verbindung zwischen dem Blockierelement und der Schaltkulisse herstellen, wodurch die Schaltkulisse von dem Blockierelement schwingungsmechanisch entkoppelt ist.

Bevorzugt ist das Blockierelement mittels eines Bolzens drehbar an der Schaltkulisse gehalten. Bei der Kontaktierung des Blockierelements mit dem Schaltfinger des Getriebes kann das Blockierelement um die durch den Bolzen vorgegebene Achse drehen, wobei die Dämpfungseinrichtung die Drehbewegung puffert.

Gemäß einer weiteren bevorzugten Ausgestaltung der vorliegenden Erfindung ist die Dämpfungseinrichtung eine Feder, ein Elastomer, ein pneumatischer Dämpfer, ein Kunststoff oder dergleichen. Somit ist eine günstige und in den Tretlagerantrieb einfach integrierbare Dämpfungseinrichtung zur Verfügung gestellt, durch die die Baugröße des Tretlagerantriebs klein gehalten ist und die Fertigungskosten reduziert werden können.

Darüber hinaus ist besonders vorteilhaft, wenn der elektrische Antrieb mit der Schaltkulisse mittels einer Spindel gekoppelt ist. Die Spindel ist einerseits eine kostengünstige Untersetzung für den elektrischen Antrieb, so dass dieser kleindimensioniert ausgebildet und darüber hinaus ausreichend robust für die Anwendung sein kann.

Darüber hinaus ist besonders vorteilhaft, wenn das Blockierelement mittels Tellerfedern an mindestens einem Stift gehalten ist. Eine derartige Dämpfungseinrichtung ist besonders kostengünstig und ermöglicht eine einfache Integration der Dämpfungseinrichtung in eine Schaltkulisse.

Weiterhin ist es besonders vorteilhaft, wenn ein Sensor die Position der Schaltkulisse erfassen kann. Dadurch ist ein störungsfreies und präzises Schalten möglich, ohne dass die Schaltung von Zeit zu Zeit nachgestellt oder erneut kalibriert werden muss.

Gemäß einer weiteren vorteilhaften Ausgestaltung sind die Schaltfinger und/oder die Schaltkulisse in einem Sinterverfahren hergestellt. Aufgrund der Dämpfung zwischen dem mindestens ein Schaltfinger und der Schaltkulisse können weniger hochfeste Materialien und kostenintensive Fertigungsverfahren angewandt werden, wodurch beispielsweise Metallsintern oder dergleichen möglich sind.

Ferner betrifft die vorliegende Erfindung ein Fahrzeug, insbesondere ein Zweirad, mit einem erfindungsgemäßen Tretlagerantrieb, wobei zwischen dem Schaltfinger und der Schaltkulisse eine Dämpfungseinrichtung vorgesehen ist, durch die die Stoß- und die Geräuschbelastung beim Schalten reduziert ist.

### Zeichnung

Nachfolgend werden bevorzugte Ausführungsbeispiele der Erfindung unter Bezugnahme auf die begleitende Zeichnung im Detail beschrieben. In der Zeichnung ist:
- Figur 1: eine schematische Ansicht eines Fahrzeugs mit einem Tretlagerantrieb gemäß einem bevorzugten Ausführungsbeispiel der Erfindung,
- Figur 2: eine schematische, perspektivische und teilweise geschnittene Ansicht des Tretlagerantriebs mit einem elektrischen Fahrzeugantrieb, einem elektrischen Schaltantrieb, der mittels eines Schaltgetriebes und einer Spindel mit einer Schaltkulisse gekoppelt ist,
- Figur 3: eine vergrößerte Detailansicht der Schaltkulisse gemäß Figur 2 im Schnitt, wobei die Schaltkulisse zweiteilig aus einem ersten Teil und einem zweiten Teil ist und dass erste Teil und das zweite Teil mittels einer Dämpfungseinrichtung gekoppelt sind,
- Figur 4a: eine perspektivische vergrößerte Detailansicht eines zweiten Ausführungsbeispiels eines erfindungsgemäßen Tretlagerantriebs,
- Figur 4b: eine perspektivische und teilweise geschnittene Ansicht des Tretlagerantriebs gemäß Figur 4a,
- Figur 5: ein drittes Ausführungsbeispiel des erfindungsgemäßen Tretlagerantriebs in einer perspektivischen, geschnittenen Ansicht, und
- Figur 6: ein viertes Ausführungsbeispiel des erfindungsgemäßen Tretlagerantrieb in einer perspektivischen, geschnittenen Ansicht.

### Bevorzugte Ausführungsformen der Erfindung

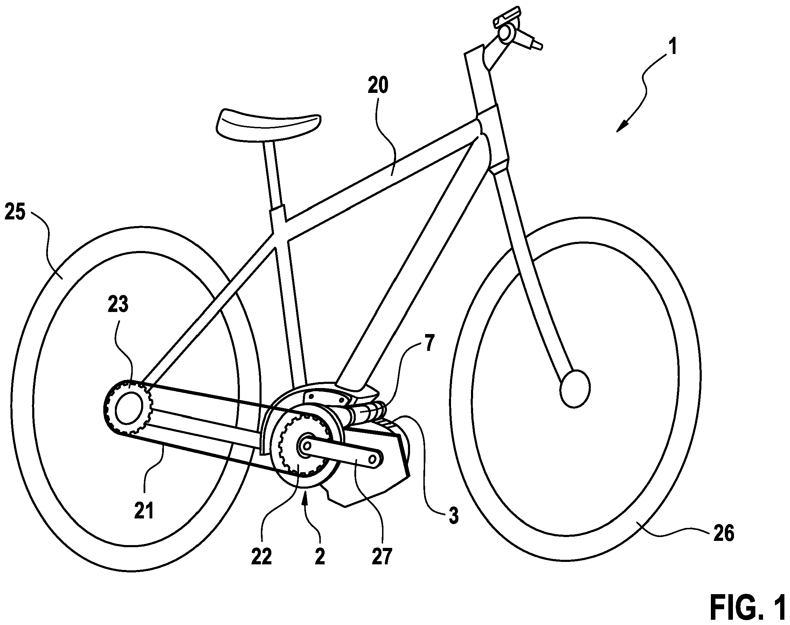

Nachfolgend wird unter Bezugnahme auf die Figuren 1 bis 6 ein Fahrzeug 1 mit vier bevorzugten Ausführungsbeispielen eines Tretlagerantriebs 2 im Detail beschrieben.

Ein erstes Ausführungsbeispiel ist in den Figuren 1 bis 3 gezeigt.

Das Fahrzeug 1, beispielsweise ein Zweirad bzw. Elektrofahrrad, umfasst einen Rahmen 20 und ein Hinterrad 25 und ein Vorderrad 26. Das Hinterrad 25 ist mittels eines Zahnkranzes 23, einer Kette 21 oder Zahnriemen und einem Ritzel 22 mit einem an dem Rahmen 20 angeordneten Tretlagerantrieb 2 gekoppelt und mittels an einer Kurbel 27 angeordneter Pedale und/oder eines elektrischen Fahrzeugantriebs 3 des Tretlagerantriebs 2 angetrieben. Ein solcher unterhalb des Rahmens 20 angeordneter elektrischer Fahrzeugantrieb 3 wird auch Mittelmotor genannt.

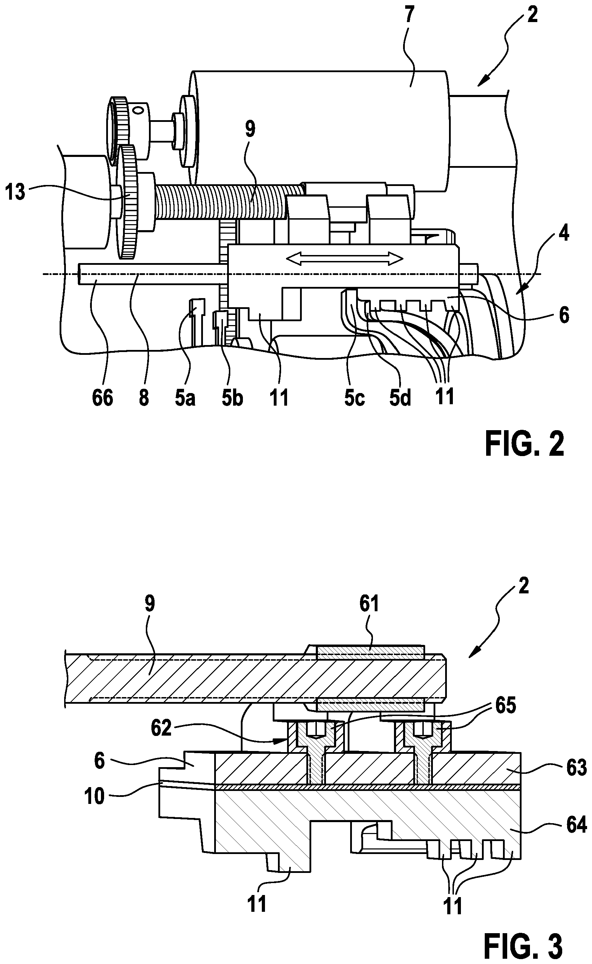

Der Tretlagerantrieb 2, und dies ist insbesondere Figur 2 zu entnehmen, umfasst eine Schaltung. Die Schaltung weist einen elektrischen Schaltantrieb 7 auf, der mittels eines Schaltgetriebes 13 und einer Spindel 9 mit einer Schaltkulisse 6 gekoppelt ist, durch die die Schaltkulisse 6 entlang einer Schaltachse 8 zur Betätigung eines schaltbares Getriebes 4 beweglich gehalten ist.

Der Tretlagerantrieb 2 ist eine Baueinheit, die den elektrischen Fahrzeugantrieb 3, sowie die Schaltung umfasst. Der Tretlagerantrieb 2 kann aus einem Gehäuse oder aus mehreren Gehäusen die eine Einheit bilden, hergestellt sein, so dass die Schaltung und der elektrische Fahrzeugantrieb 3 in einer Einheit integriert sind.

Das Getriebe 4 ist als Planetengetriebe ausgebildet umfasst Schaltfinger 5a, 5b, 5c, 5d, welche jeweils mit einem Zahnrad des Getriebes 4 gekoppelt sind und gemeinsam mit diesen Zahnrädern rotieren. Das dargestellte Getriebe 4 hat sieben Gänge, wobei das Schalten in einen jeweiligen Gang durch das Blockieren eines oder mehrerer Schaltfinger 5a, 5b, 5c, 5d erfolgt. Die entsprechenden Schaltfinger 5a, 5b, 5c, 5d werden mittels an der Schaltkulisse 6 angeformten Blockierelementen 11 arretiert, welche zusammen mit der Schaltkulisse 6 entlang der Schaltachse 8 durch den elektrischen Schaltantrieb 7 beweglich sind.

In Abhängigkeit von dem gewählten Gang werden eine oder mehrere Kombinationen von mehreren Schaltfingern 5a, 5b, 5c, 5d durch die entsprechenden Blockierelemente 11 arretiert. Die Schaltfinger 5a, 5b, 5c, 5d werden dabei schlagartig abgebremst und die beteiligten Komponenten werden durch den Stoß mechanisch belastet und Lärm entsteht.

Um die Stoß- und Geräuschbelastung zwischen dem Blockierelement 11 und den jeweiligen Schaltfingern 5a, 5b, 5c, 5d zu dämpfen, ist die Schaltkulisse 6 mindestens zweiteilig aus einem ersten Teil 63 und einem zweiten Teil 64 ausgebildet, wobei das zweite Teil 64 die Blockierelemente 11 aufweist.

Darüber hinaus kann die Schaltkulisse 6 einen Lagerblock 62 sowie eine Spindelmutter 61 aufweisen, wobei die Spindelmutter 61 und der Lagerblock 62 die Kopplung der Schaltkulisse 6 mit dem elektrischen Schaltantrieb 7 über eine Spindel 9 bilden. Der Schaltantrieb 7 ist mit dem ersten Teil 63 der Schaltkulisse 6 mittels einer Schraubverbindung 65 mit der Lagerblock 62 verbunden, der an einer Stange 66 entlang der Schaltachse 8 beweglich abgestützt ist (vgl. Figur 2).

Der geschnittenen Darstellung in Figur 3 ist zu entnehmen, dass die Dämpfungseinrichtung 10 als Verbindung flächig zwischen dem ersten Teil 63 und dem zweiten Teil 64 der Schaltkulisse 6 angeordnet ist. Das zweite Teil 64 weist vier unterschiedlich ausgebildete Blockierelemente 11 auf, wobei das zweite Teil 64 und die Blockierelemente 11 einteilig ausgebildet sind.

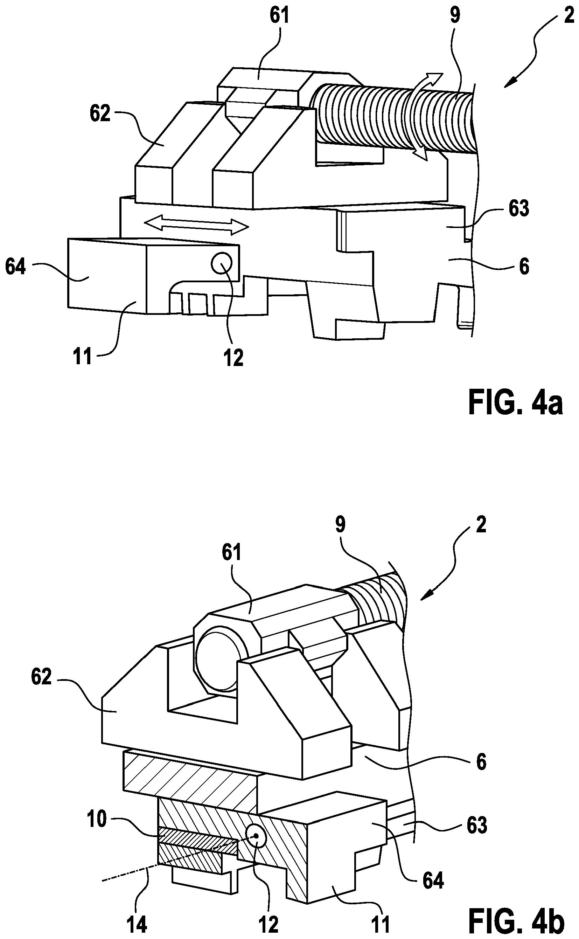

Nachfolgend wird unter Bezugnahme auf die Figuren 4a und 4b ein zweites Ausführungsbeispiel des erfindungsgemäßen Tretlagerantriebs 2 beschrieben, wobei gleiche bzw. funktional gleiche Teile mit den gleichen Bezugszeichen wie im ersten Ausführungsbeispiel bezeichnet sind.

Das zweite Teil 64 ist mit dem Blockierelement 11 nach Art eines Anschlages mit einem Bolzen 12 an der Schaltkulisse 6 drehbar gelagert. Bei einer Kollision des Blockierelementes 11 mit einem der Schaltfinger 5a, 5b, 5c, 5d kann der zweite Teil 64 durch eine Drehbewegung um die Bolzenachse 14 nachgeben, wobei die Drehbewegung durch die Dämpfungseinrichtung 10 abgefangen wird.

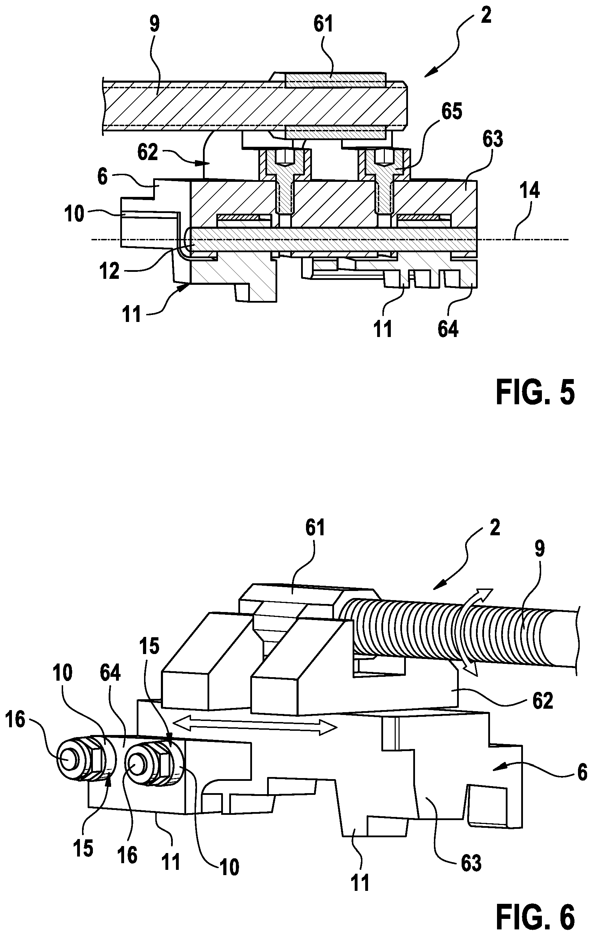

Ein drittes Ausführungsbeispiel ist in Figur 5 dargestellt. Das dritte Ausführungsbeispiel ist analog zu dem zweiten Ausführungsbeispiels ausgebildet, wobei das zweite Teil 64 mehrteilig ausgebildet ist und das jeweilige zweite Teil 64 mit dem Blockierelement 11 bzw. Blockierelementen 11 nach Art eines Scharniers mittels eines Bolzens 12 an dem ersten Teil 63 der Schaltkulisse 6 drehbar gelagert ist. Beabstandet zu der Bolzenachse 14 ist die Dämpfungseinrichtung 10 derart zwischen dem ersten Teil 63 und dem zweiten Teil 64 angeordnet, dass das aus dem Kontakt eines Blockierelementes 11 mit einem Schaltfinger 5a, 5b, 5c, 5d resultierende Moment um die Bolzenachse 14 abgefedert ist. Insbesondere das einzelne Blockierelement 11 (in Figur 5 links) ist mechanisch am stärksten belastet und daher stärker ausgeführt. Durch eine zweiteilige Ausbildung des zweiten Teils 64 der Schaltkulisse können die Werkstoffe auf die mechanische Belastung angepasst werden und gegebenenfalls kostengünstige Herstellungsverfahren für die jeweiligen Blockierelemente 11 gewählt werden.

Ein viertes Ausführungsbeispiel der vorliegenden Erfindung ist in Figur 6 dargestellt, wobei gleiche bzw. funktional gleiche Teile mit den gleichen Bezugszeichen wie in den vorherigen Ausführungsbeispielen bezeichnet sind. Der zweite Teil 64 der Schaltkulisse 6 ist durch zwei Stifte 16 an dem ersten Teil 63 der Schaltkulisse 6 gelagert gehalten, wobei das zweite Teil 64 mittels Tellerfedern 15, die die Dämpfungseinrichtung 10 bilden, mit den Stiften 16 gekoppelt ist.

Die einzelnen in den Ausführungsbeispielen vorgestellten Lösungen sind miteinander kombinierbar, so dass jedes Blockierelement 11 an der Schaltkulisse 6 eine individualisierte Dämpfung aufweisen kann.

Somit kann erfindungsgemäß ein Tretlagerantrieb 2 für ein Fahrzeug 1, sowie ein Fahrzeug 1 mit einem solchen Tretlagerantrieb 2 und einer Dämpfungseinrichtung 11 zur Verfügung gestellt werden, welche die Stoß- und Geräuschbelastung beim Schalten reduzieren, und die Verwendung von günstigeren Materialien und oder günstigeren Fertigungsverfahren ermöglichen.

## Patentansprüche

1. Tretlagerantrieb eines Fahrzeuges (1), insbesondere eines Zweirades, umfassend:
- einen elektrischen Fahrzeugantrieb (3),
- ein Getriebe (4),
**dadurch gekennzeichnet, dass** der Tretlagerantrieb weiter umfasst:
- eine Schaltkulisse (6),
- einen elektrischen Antrieb (7) zur Betätigung der Schaltkulisse (6), und
- eine Dämpfungseinrichtung (10)
- wobei die Dämpfungseinrichtung (10) den Schaltstoß zwischen dem Getriebe (4) und der Schaltkulisse (6) dämpft.

2. Tretlagerantrieb nach Anspruch 1, **dadurch gekennzeichnet, dass** das Getriebe (4) mindestens einen Schaltfinger (5) umfasst.

3. Tretlagerantrieb nach Anspruch 2, **dadurch gekennzeichnet, dass** der mindestens eine Schaltfinger (5) und/oder die Schaltkulisse (6) mindestens zweiteilig mit einem ersten Teil (63) und einem zweiten Teil (64) ausgebildet ist bzw. sind, wobei zwischen dem ersten Teil und dem zweiten Teil die Dämpfungseinrichtung (10) angeordnet ist.

4. Tretlagerantrieb einem der Ansprüche 1 bis 3, **dadurch gekennzeichnet, dass** die Schaltkulisse (6) mindestens ein Blockierelement (11) aufweist.

5. Tretlagerantrieb nach Anspruch 4, **dadurch gekennzeichnet, dass** die Dämpfungseinrichtung (10) zwischen dem Blockierelement (11) und der Schaltkulisse (6) angeordnet ist.

6. Tretlagerantrieb nach einem der vorgenannten Ansprüche, **dadurch gekennzeichnet, dass** das mindestens eine Blockierelement (11) mittels mindestens eines Bolzens (12) drehbar an der Schaltkulisse (6) gehalten ist.

7. Tretlagerantrieb nach einem der vorgenannten Ansprüche, **dadurch gekennzeichnet, dass** die Dämpfungseinrichtung (10) eine Feder, ein Elastomer, ein pneumatischer Dämpfer, ein Kunststoff oder dergleichen ist.

8. Tretlagerantrieb nach einem der vorgenannten Ansprüche, **dadurch gekennzeichnet, dass** der elektrische Antrieb (7) die Schaltkulisse (6) mittels einer Spindel (9) bewegt.

9. Tretlagerantrieb nach einem der vorgenannten Ansprüche, **dadurch gekennzeichnet, dass** das Blockierelement (11) mit mindestens einer Tellerfeder (15) und mindestens einem Stift (16) an der Schaltkulisse (6) gehalten ist.

10. Tretlagerantrieb nach einem der vorgenannten Ansprüche, **dadurch gekennzeichnet, dass** das ein Sensor die Position der Schaltkulisse (6) erfasst.

11. Tretlagerantrieb nach einem der vorgenannten Ansprüche, **dadurch gekennzeichnet, dass** die Schaltfinger (5) und/oder die Schallkulisse (6) in einem Sinterverfahren hergestellt ist bzw. sind.

12. Fahrzeug, insbesondere ein Zweirad oder Elektrofahrrad, mit einem Tretlagerantrieb (2) nach einem der vorgenannten Ansprüche.

## Claims

1. Bottom bracket drive of a vehicle (1), in particular of a two-wheeled vehicle, comprising:
- an electrical vehicle drive (3),
- a gear mechanism (4),
**characterized in that** the bottom bracket drive further comprises:
- a shift link (6),
- an electrical drive (7) for operating the shift link (6), and
- a damping device (10),
- wherein the damping device (10) damps the shifting jolt between the gear mechanism (4) and the shift link (6) .

2. Bottom bracket drive according to Claim 1, **characterized in that** the gear mechanism (4) comprises at least one shift finger (5).

3. Bottom bracket drive according to Claim 2, **characterized in that** the at least one shift finger (5) and/or the shift link (6) are/is of at least two-part design comprising a first part (63) and a second part (64), wherein the damping device (10) is arranged between the first part and the second part.

4. Bottom bracket drive according to one of Claims 1 to 3, **characterized in that** the shift link (6) has at least one blocking element (11).

5. Bottom bracket drive according to Claim 4, **characterized in that** the damping device (10) is arranged between the blocking element (11) and the shift link (6).

6. Bottom bracket drive according to one of the preceding claims, **characterized in that** the at least one blocking element (11) is held in a rotatable manner on the shift link (6) by means of at least one bolt (12).

7. Bottom bracket drive according to one of the preceding claims, **characterized in that** the damping device (10) is a spring, an elastomer, a pneumatic damper, a plastic or the like.

8. Bottom bracket drive according to one of the preceding claims, **characterized in that** the electric drive (7) moves the shift link (6) by means of a spindle (9) .

9. Bottom bracket drive according to one of the preceding claims, **characterized in that** the blocking element (11) is held on the shift link (6) by way of at least one plate spring (15) and at least one pin (16).

10. Bottom bracket drive according to one of the preceding claims, **characterized in that** the a sensor detects the position of the shift link (6).

11. Bottom bracket drive according to one of the preceding claims, **characterized in that** the shift finger (5) and/or the shift link (6) are/is produced in a sintering process.

12. Vehicle, in particular a two-wheeled vehicle or electric cycle, comprising a bottom bracket drive (2) according to one of the preceding claims.

## Revendications

1. Entraînement de palier de pédalier d'un véhicule (1), en particulier une bicyclette, comprenant :
un entraînement électrique du véhicule (3),
un mécanisme à engrenages (4),
**caractérisé en ce que** l'entraînement de palier de pédalier comprend en outre :
un coulisseau de commande (6),
un entraînement électrique (7) d'actionnement du coulisseau de commande (6),
et un dispositif d'amortissement (10),
le dispositif d'amortissement (10) amortissant le choc de commande entre le mécanisme à engrenages (4) et le coulisseau de commande (6).

2. Entraînement de palier de pédalier selon la revendication 1, **caractérisé en ce que** le mécanisme à engrenages (4) comprend au moins un ergot de commande (5) .

3. Entraînement de palier de pédalier selon la revendication 2, **caractérisé en ce que** l'au moins un ergot de commande (5) et/ou le coulisseau de commande (6) sont composés d'au moins deux parties, dont une première partie (63) et une deuxième partie (64), le dispositif d'amortissement (10) étant disposé entre la première partie et la deuxième partie.

4. Entraînement de palier de pédalier selon l'une quelconque des revendications 1 à 3, **caractérisé en ce que** le coulisseau de commande (6) comporte au moins un élément de blocage (11).

5. Entraînement de palier de pédalier selon la revendication 4, **caractérisé en ce que** le dispositif d'amortissement (10) est disposé entre l'élément de blocage (11) et le coulisseau de commande (6).

6. Entraînement de palier de pédalier selon l'une quelconque des revendications précédentes, **caractérisé en ce que** l'au moins un élément de blocage (11) est monté mobile en rotation sur le coulisseau de commande (6) au moyen d'un goujon (12).

7. Entraînement de palier de pédalier selon l'une quelconque des revendications précédentes, **caractérisé en ce que** le dispositif d'amortissement (10) est un ressort, un élastomère, un amortisseur pneumatique, un matériau de synthèse, ou similaire.

8. Entraînement de palier de pédalier selon l'une quelconque des revendications précédentes, **caractérisé en ce que** l'entraînement électrique (7) déplace le coulisseau de commande (6) au moyen d'une broche (9).

9. Entraînement de palier de pédalier selon l'une quelconque des revendications précédentes, **caractérisé en ce que** l'élément de blocage (11) est monté sur le coulisseau de commande (6) au moyen d'au moins une rondelle-ressort (15) et d'au moins une cheville (16).

10. Entraînement de palier de pédalier selon l'une quelconque des revendications précédentes, **caractérisé en ce que** le un capteur détecte la position du coulisseau de commande (6).

11. Entraînement de palier de pédalier selon l'une quelconque des revendications précédentes, **caractérisé en ce que** les ergots de commande (5) et/ou le coulisseau de commande (6) sont fabriqués par un procédé de frittage.

12. Véhicule, en particulier une bicyclette ou une bicyclette électrique, doté d'un entraînement de palier de pédalier (2) selon l'une quelconque des revendications précédentes.
